# EUROPÄISCHE PATENTSCHRIFT

(11) **EP 2 686 952 B1**
(45) Veröffentlichungstag und Bekanntmachung des Hinweises auf die Patenterteilung: **19.08.2020**
(21) Anmeldenummer: 12701241.7
(22) Anmeldetag: 16.01.2012
(51) Int. Cl.: H02P 6/16, G05D 3/12, G05D 3/20, H02P 23/00

(54) **VERFAHREN UND VORRICHTUNG ZUR ADAPTION EINER KOMMUTIERUNG FÜR EINE ELEKTRONISCH KOMMUTIERTE ELEKTRISCHE MASCHINE**
METHOD AND APPARATUS FOR ADAPTING COMMUTATION FOR AN ELECTRONICALLY COMMUTATED ELECTRICAL MACHINE
PROCÉDÉ ET DISPOSITIF D'ADAPTATION D'UNE COMMUTATION POUR UN MOTEUR ÉLECTRIQUE À COMMUTATION ÉLECTRONIQUE

(30) Priorität: 18.03.2011 DE 102011005774
(43) Veröffentlichungstag der Anmeldung: 22.01.2014
(73) Patentinhaber: Robert Bosch GmbH, 70442 Stuttgart (DE)
(72) Erfinder: GROSSMANN, Alex, 71229 Leonberg (DE); SIEBER, Udo, 74321 Bietigheim (DE); BUEHRLE, Ralf, 71686 Hochberg (DE); TOSUN, Zeynep, Esenyurt Istanbul (TR)
(86) Internationale Anmeldenummer: PCT/EP2012/050549
(87) Internationale Veröffentlichungsnummer: WO 2012/126641

(56) Entgegenhaltungen:
- JP-A- 2000 209 888
- JP-A- 2000 217 385
- JP-A- 2007 267 576
- US-B2- 7 511 448

## Beschreibung

### Technisches Gebiet

Die Erfindung betrifft im Allgemeinen die Ansteuerung von elektronisch kommutierten elektrischen Maschinen, insbesondere Maßnahmen zur Adaption des Voreilwinkels zwischen einem an einem Läufer der elektrischen Maschine erzeugten Erregerfeld und einem durch die Kommutierung der Statorspulen erzeugten Motormagnetfeld.

### Stand der Technik

Eine elektronisch kommutierte elektrische Maschine, wie beispielsweise eine Synchronmaschine oder eine Asynchronmaschine, weist einen Stator und einen Läufer auf. Der Stator dient dazu, ein Motormagnetfeld bereitzustellen. Der Läufer umfasst Permanentmagnete und/oder kurzgeschlossene Läuferspulen, um ein Erregermagnetfeld bereitzustellen.

Der Stator weist mehrere Statorspulen auf, die jeweils einer oder mehreren Phasen der elektrischen Maschine zugeordnet sind. Die Statorspulen werden zum Betreiben der elektrischen Maschine als Motor in geeigneter Weise bestromt, so dass das Motormagnetfeld erzeugt wird. Durch die Wechselwirkung zwischen dem Motormagnetfeld und dem Erregermagnetfeld ergibt sich ein Antriebsmoment, das auf den Läufer wirkt.

Die Bestromung der einzelnen Statorspulen wird gemäß einem Kommutierungsverfahren durchgeführt, wobei zur Erzeugung eines maximalen Antriebsmoments eine Voreilung des von den Statorspulen erzeugten Motormagnetfelds in Richtung des Erregermagnetfelds vorgesehen werden muss. Da sich der Läufer bezüglich der Statorspulen bewegt, muss zum Anlegen einer geeigneten Bestromung an die Statorspulen die Lage des Läufers (Läuferlage) und somit die Richtung des Erregermagnetfelds bekannt sein, um das Motormagnetfeld mit entsprechender Voreilung erzeugen zu können. Ein maximales Antriebsmoment kann bei einer Voreilung des Motormagnetfelds zu dem Erregermagnetfeld von 90° (elektrische Läuferlage; entspricht der mechanischen Läuferlage dividiert durch die Polpaarzahl des Läufers) erreicht werden.

Daher ist in elektronisch kommutierten elektrischen Maschinen üblicherweise ein interner Lagesensor zur Detektion der Läuferlage vorgesehen. Abhängig von der durch den Lagesensor detektierten Läuferlage werden dann die Bestromungsmuster an die entsprechenden Statorspulen angelegt. In der Regel ist der interne Lagesensor so dimensioniert, dass er eine ausreichende Lageauflösung bereitstellt, um die Kommutierung durchzuführen.

Bei einem Einsatz einer elektronisch kommutierten elektrischen Maschine für einen Stellgeber kann es zur Reduzierung des Aufwands zur Detektion der Läuferlage vorgesehen sein, auf einen internen Lagesensor zu verzichten und lediglich eine Stellung des durch die elektrische Maschine betriebenen Stellglieds zu detektieren. Die Verwendung eines sogenannten externen Lagesensors zur Erfassung der Stellung des Stellglieds verringert sowohl den Aufwand für die elektrische Maschine als auch den Aufwand für die Verkabelung zwischen der elektrischen Maschine und dem Steuergerät und stellt daher einen Vorteil dar. Häufig ist jedoch das Stellglied über ein Untersetzungsgetriebe mit der elektrischen Maschine verbunden, so dass ein Rückschluss auf die Läuferlage aus der Stellung des Stellglieds aufgrund der Untersetzung und aufgrund des unvermeidbaren Spiels nur ungenau möglich ist. Auch bei Verwendung eines internen Lagesensors kann es aus Kostengründen zweckmäßig sein, die Genauigkeit der Auflösung des Lagesensors zu beschränken.

Die Ungenauigkeiten bei der Ermittlung der Läuferlage aus der Stellung des Stellglieds haben zur Folge, dass die Voreilung nicht auf den optimalen Voreilungswinkel von 90° einstellbar ist. Somit hat die Verwendung eines externen Lagesensors zum Betrieb der elektronisch kommutierten elektrischen Maschine den Nachteil, dass das Betreiben der elektrischen Maschine nicht mit einem maximalen Drehmoment möglich ist.

Es ist daher Aufgabe der vorliegenden Erfindung, eine verbesserte Kommutierung einer elektronisch kommutierten elektrischen Maschine, bei der eine Information über eine Läuferlage mit einer reduzierten Genauigkeit vorliegt, vorzusehen.

Aus der US 7 511 448 B2 sind eine Vorrichtung und ein Verfahren zur Steuerung eines elektronisch kommutierten Motors bekannt. Dabei wird ein rotorfestes d-q-Koordinatensystem zugrunde gelegt. Bei zunächst unbekannter Lage des Rotors wird ein Stromzeigers des Stators eingestellt und die entlang der vermuteten d-Richtung zeigende Komponente dieses Stromzeigers wird von einem oszillierenden Hilfssignal überlagert. In Abhängigkeit von einem sich aus dieser Änderung des Stromzeigers ergebenden Geschwindigkeitsänderung des Rotors kann dann der Stromzeiger optimiert werden.

### Offenbarung der Erfindung

Diese Aufgabe wird durch das Verfahren zur Adaption einer Kommutierung einer elektronisch kommutierten elektrischen Maschine gemäß Anspruch 1 sowie durch die Vorrichtung und das Motorsystem gemäß den nebengeordneten Ansprüchen gelöst.

Weitere vorteilhafte Ausgestaltungen sind in den abhängigen Ansprüchen angegeben.

Gemäß einem ersten Aspekt ist ein Verfahren zur Lageregelung eines mit einer Rückstellkraft beaufschlagten Stellglieds in einem Stellgebersystem mit einer elektronisch kommutierten elektrischen Maschine vorgesehen. Das Verfahren umfasst die folgenden Schritte:
- Durchführen der Lageregelung des Stellglieds abhängig von einer vorgegebenen Soll-Stellungsangabe und einer Ist-Stellungsangabe, wobei die Lageregelung eine Stellgröße bereitstellt, die einem Raumzeiger mit einer vorgegebener Amplitude zugeordnet ist, mit dem eine Statoranordnung der elektrischen Maschine ansteuerbar wird;
- Beaufschlagen des Raumzeigers mit einer Korrekturgröße, um einen Raumzeigerwinkel des Raumzeigers zu korrigieren;
- Bereitstellen eines periodischen Hilfssignals;
- Variieren des Raumzeigerwinkels des durch die Stellgröße definierten Raumzeigers durch das Hilfssignal;
- Aufintegrieren einer Größe zu einem Integrationswert, wobei die zu integrierende Größe von dem Hilfssignal und der Stellgröße der Lageregelung, die als Reaktion auf das Variieren des Raumzeigerwinkels des Raumzeigers erhalten wurde, abhängt, wobei aus dem Integrationswert die Korrekturgröße (PO) abgeleitet wird.

Eine Idee des obigen Verfahrens besteht darin, dass in einem Stellgebersystem, dessen Stellglied auf eine Stellung eingestellt werden soll, auch bei Verwendung eines Lagesensors, dessen Lageauflösung zum Bestimmen eines ordnungsgemäßen Kommutierungsmusters für die Ansteuerung der Statorspulen zu gering ist, die Ansteuerung der elektrischen Maschine des Stellgebersystems so durchgeführt werden kann, dass eine Voreilung des Motormagnetfelds bezüglich des Erregermagnetfelds möglichst auf 90° adaptiert wird. Dies wird dadurch erreicht, dass eine Stellgröße aus einer Lageregelung zum Einstellen der Stellung des Stellglieds mithilfe einer Korrekturgröße auf eine Sollstellung korrigiert wird. Die Korrektur erfolgt, indem die Stellgröße eines Lageregelungskreises mit einem Phasenoffset korrigiert wird, der entsprechend einem periodischen Hilfssignal eine Variation des Raumzeigerwinkels des Raumzeigers, der der Stellgröße entspricht, hervorruft. Die entsprechende Reaktion der Lageregelung wird analysiert.

Ist das Motormagnetfeld um genau 90° voreilend zu dem Erregermagnetfeld, so führt das Variieren des Raumzeigerwinkels in beiden Halbwellen des Hilfssignals im Mittel zu einer konstanten Abschwächung des Stellmoments, so dass keine Variation in der Stellgröße hervorgerufen wird. Bei einer Abweichung des Voreilungswinkels zwischen dem Motormagnetfeld und dem Erregermagnetfeld von dem idealen Voreilungswinkel von 90° führt die Variation des Raumzeigerwinkels zu einer unterschiedlichen Erhöhung bzw. Erniedrigung des Stellmoments und dadurch zu einer Reaktion der Lageregelung in Form einer Schwankung der Stellgröße, deren Frequenz der Frequenz des Hilfssignals entspricht. Diese Schwankung der Stellgröße kann entsprechend ausgewertet werden, um die Korrekturgröße zu adaptieren. Auf diese Weise können auch toleranzbehaftete Lagesensorsignale für die Kommutierung verwendet werden, da durch das obige Verfahren die Korrekturgröße eine etwaige Ungenauigkeit des Lagesensors ausgleicht. Auch können die sich im Laufe des Betriebs einstellenden Sensorfehler des Lagesensors, wie thermisches Driften, Exemplarstreuung oder Alterungseffekte, die die optimale Voreilung von Motormagnetfeld zu Erregermagnetfeld verändern, adaptiert werden.

Es kann vorgesehen sein, dass das Hilfssignal und die durch das Variieren des Raumzeigerwinkels des Raumzeigers erhaltene Stellgröße bandpassgefiltert werden, wobei die zu integrierende Größe einem Produkt des bandpassgefilterten Hilfssignals und der bandpassgefilterten durch das Variieren des Raumzeigerwinkels des Raumzeigers erhaltenen Stellgröße entspricht.

Weiterhin kann die zu integrierende Größe vor dem Integrieren tiefpassgefiltert werden.

Gemäß einer Ausführungsform kann eine Vorsteuerung vorgesehen sein, um die Soll-Stellungsangabe einer Vorsteuergröße zuzuordnen, mit der die von der Lageregelung bereitgestellte Stellgröße, insbesondere durch Addition, beaufschlagt wird.

Weiterhin kann das Hilfssignal periodisch sein und eine hauptfrequenz des periodischen Hilfssignals geringer sein als die Grenzfrequenz der Lageregelung.

Insbesondere kann das Hilfssignal periodisch sein und als Rechtecksignal, trapezförmiges Signal oder sinusförmiges Signal oder als eine Kombination davon bereitgestellt werden.

Weiterhin kann vorgesehen sein, dass der Raumzeigerwinkel in einem Bereich von bis zu +/- 20°, insbesondere in einem Bereich von bis zu +/- 10° des Raumzeigerwinkels variiert wird.

Gemäß einem weiteren Aspekt ist eine Vorrichtung zur Lageregelung eines Stellglieds in einem Stellgebersystem mit einer elektronisch kommutierten elektrischen Maschine vorgesehen. Die Vorrichtung umfasst:
- eine Lageregelungseinheit zum Durchführen einer Lageregelung abhängig von einer vorgegebenen Soll-Stellungsangabe und einer Ist-Stellungsangabe, wobei die Lageregelung eine Stellgröße bereitstellt, die einem Raumzeiger mit einer vorgegebener Amplitude entspricht, mit dem eine Statoranordnung der elektrischen Maschine ansteuerbar wird;
- eine Einrichtung zum Beaufschlagen des Raumzeigers mit einer Korrekturgröße, um einen Raumzeigerwinkel des Raumzeigers zu korrigieren;
- einen Signalgenerator zum Bereitstellen eines periodischen Hilfssignals;
- eine Einrichtung zum Variieren des Raumzeigerwinkels des durch die Stellgröße definierten Raumzeigers durch das Hilfssignal;
- einen Integrator zum Aufintegrieren einer Größe zu einem Integrationswert, wobei die zu integrierende Größe von dem Hilfssignal und der Stellgröße der Lageregelung, die als Reaktion auf das Variieren des Raumzeigerwinkels des Raumzeigers erhalten wurde, abhängt, wobei aus dem Integrationswert die Korrekturgröße (PO) abgeleitet wird.

Gemäß einem weiteren Aspekt ist ein Stellgebersystem vorgesehen. Das Stellgebersystem umfasst:
- ein mit einer Rückstellkraft beaufschlagtes Stellglied;
- einen Lagesensor zum Bereitstellen einer Ist-Stellungsangabe;
- eine elektrische Maschine, die mit dem Stellglied gekoppelt ist;
- die obige Vorrichtung.

Gemäß einem weiteren Aspekt ist ein Computerprogrammprodukt vorgesehen, das einen Programmcode enthält, der, wenn er auf einer Datenverarbeitungseinheit ausgeführt wird, das obige Verfahren durchführt.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines Stellgebersystems zum Stellen eines Stellglieds;
- Figur 2: eine Darstellung des Verlaufs des Drehmoments bezüglich einer Voreilung zwischen dem Motormagnetfeld und einem von dem Läufer erzeugten Erregermagnetfeld;
- Figur 3: eine schematische Darstellung der Lageregelung mit einer Adaption auf einen Voreilungswinkel von 90°; und
- Figur 4: eine weitere Ausführungsform der Lageregelung der Figur 3.

### Beschreibung von Ausführungsformen

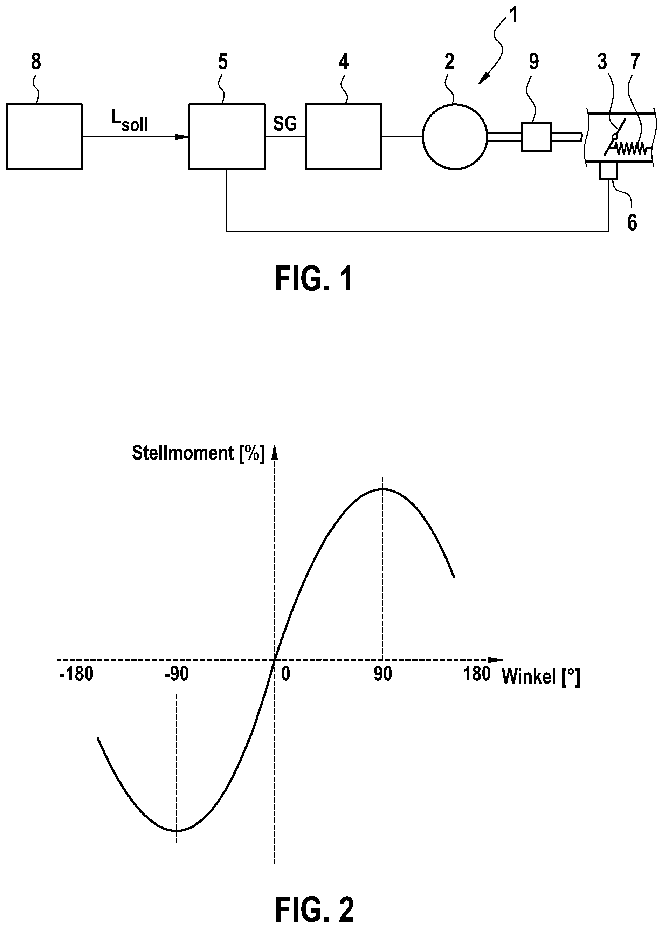

Figur 1 zeigt eine schematische Darstellung eines Stellgebersystems 1 mit einem Synchronmotor 2 als elektronisch kommutierte elektrische Maschine, wobei ein Läufer (nicht gezeigt) des Synchronmotors 2 mit einem Stellglied 3, beispielsweise über ein Getriebe 9 oder dergleichen, gekoppelt ist. Beispielsweise kann das Stellgebersystem einem Drosselklappensteller in einem Verbrennungsmotor entsprechen, wobei das Stellglied 3 der Drosselklappe entspricht. Das Stellglied 3 kann mit einer Rückstellfeder 7 beaufschlagt sein, so dass zum Stellen des Stellglieds 3 auf eine bestimmte Stellung ein bestimmtes Antriebsmoment durch den Synchronmotor 2 ausgeübt werden muss.

Zum ordnungsgemäßen Betrieb benötigt der Synchronmotor 2 eine Angabe über die Läuferlage des Läufers. Wie in Figur 1 dargestellt, ist ein externer Lagesensor 6 am Stellglied 3 vorgesehen. Die Angabe zur Läuferlage wird in diesem Ausführungsbeispiel aus der Stellungsangabe zur Stellung des Stellglieds 3 ermittelt, so dass eine Lageinformation über eine Läuferlage des Synchronmotors 2 nur indirekt zur Verfügung steht.

In alternativen Ausführungsformen kann der Synchronmotor 2 zwar mit einem internen Lagesensor versehen sein, dieser kann jedoch - je nach Ausführung - eine für die erforderliche Kommutierung nur unzureichende Lageauflösung aufweisen, so dass eine ordnungsgemäße Kommutierung nicht möglich ist.

Der Synchronmotor 2 wird von einer Treiberschaltung 4 angesteuert, die abhängig von einer Stellgröße SG Phasenspannungen und/oder Phasenströme zum Anlegen an den Synchronmotor 2 generiert. Die Treiberschaltung 4 weist eine Endstufe (nicht gezeigt) auf, die in der Regel mit so genannten Inverterschaltungen ausgebildet ist, und kann je nach Phasenzahl eine 2H-Brückenschaltung, eine B6-Schaltung oder dergleichen umfassen. Die Treiberschaltung 4 weist weiterhin eine Zuordnungsfunktion auf, um die Stellgröße SG in ein entsprechendes Bestromungsmuster für den Synchronmotor 2 umzuwandeln.

Die Stellgröße SG wird in geeigneter Weise von einer Lageregelungseinheit 5, z. B. in Form von Ansteuersignalen, bereitgestellt, die diese abhängig von einer Sollstellung Lₛₒₗₗ generiert. Die Sollstellung Lₛₒₗₗ wird von einer Steuereinheit 8 bereitgestellt und kann von extern vorgegebenen Größen abhängen. Die Stellgröße SG wird mithilfe der Leistungsendstufe 4 in Spannungs- oder Stromverläufe für die Statorwicklungen des Synchronmotors 2 umgewandelt, so dass die Stellgröße einerseits eine Höhe der Phasenspannungen angibt, die eine Amplitude eines das Motormagnetfeld definierenden Raumzeigers angeben. Weiterhin kann die Stellgröße SG den Raumzeigerwinkel des Raumzeigers angeben, so dass zum Bereitstellen eines größtmöglichen Antriebsmoments des Synchronmotors 2 bzw. des größtmöglichen Wirkungsgrades eine Voreilung zwischen einem Motormagnetfeld, das von Statorspulen des Synchronmotors 2 generiert wird, und einem Erregermagnetfeld, das z. B. von Permanentmagneten in dem Läufer des Synchronmotors 2 generiert wird, von 90° elektrischer Läuferlage erreicht wird.

In der Regel ist die Position des Läufers durch einen Lagesensor 6 bekannt. Im vorliegenden Fall ist der Lagesensor 6 an dem Stellglied 3 ausgebildet, um die Stellungsangabe zu erfassen. Je nach durch das Getriebe 9 vorgesehener Untersetzung einer Bewegung des Läufers des Synchronmotors 2 zu dem Stellglied 3 kann die Auflösung der Läuferlage, die aus der Stellungsangabe des Stellglieds 3 ermittelt wird, nur ungenau sein, weshalb insbesondere eine ordnungsgemäße Kommutierung mit einem möglichst genauen Voreilungswinkel von 90° zwischen dem Motormagnetfeld und dem Erregermagnetfeld nicht gewährleistet werden kann.

Um das bei vorgegebener Amplitude des Raumzeigers größtmögliche Stellmoment von dem Synchronmotor 2 für das Stellen des Stellglieds 3 bereitzustellen, ist ein Voreilungswinkel zwischen dem Motormagnetfeld, das von den Statorspulen des Synchronmotors 2 erzeugt wird, und dem von dem Läufer erzeugten Erregermagnetfeld notwendig. Der von dem Voreilungswinkel abhängige Verlauf des Stellmoments ist beispielsweise in Figur 2 dargestellt. Man erkennt, dass bei einem Voreilungswinkel von 90° elektrischer Rotorlage das Stellmoment maximal ist.

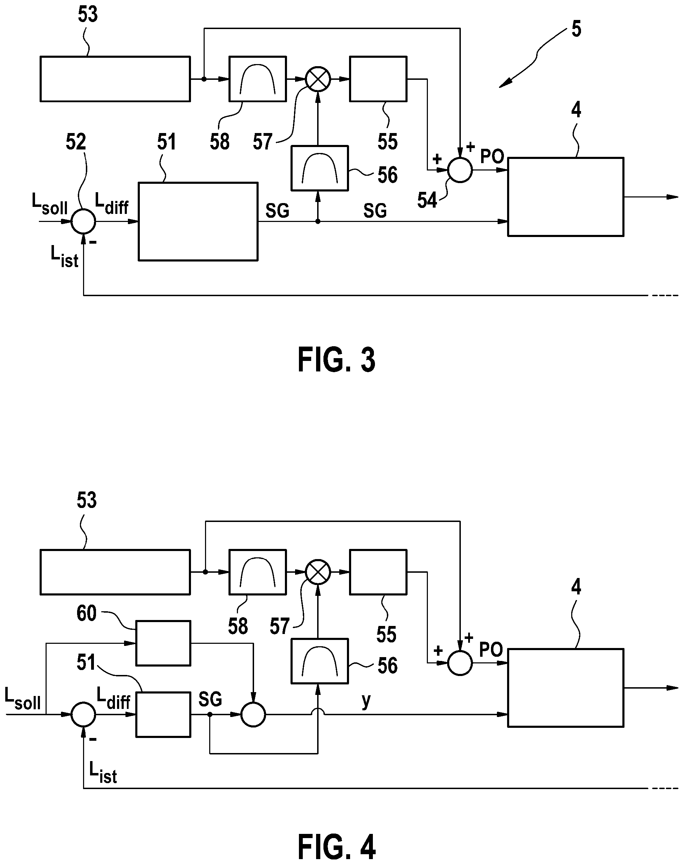

In Figur 3 ist die durch die Lageregelungseinheit 5 implementierte Lageregelung detaillierter dargestellt. Die Lageregelungseinheit 5 umfasst einen Lageregler 51, dem eine Stellungsdifferenz von einem Differenzglied 52 zugeführt wird. Das Differenzglied 52 empfängt eine Sollstellung Lₛₒₗₗ und die von dem Lagesensor 6 bereitgestellte Iststellung Lᵢₛₜ und ermittelt ein Differenzsignal L_{Diff}, das an dem Lageregler 51 bereitgestellt wird. Der Lageregler 51 erzeugt eine Stellgröße SG, die der Treiberschaltung 4 zugeführt wird, die ein der Stellgröße SG entsprechendes Kommutierungsmuster an den Synchronmotor 2 anlegt.

Die Stellgröße SG stellt grundsätzlich eine Angabe für ein Stellmoment dar. Die Höhe des Stellmoments entspricht einer Stellung des Stellglieds 3, bei der sich die Federkraft der Rückstellfeder 7 und die durch das Stellmoment bewirkte Stellkraft an der Rückstellfeder 7 ausgleichen.

Durch einen anfänglichen Abgleich des Lagesensors 6 zur Läuferlage kann aus dem Lagesensorsignal stets die geforderte Phasenlage der Spannungs- und Stromverläufe erzeugt werden. Der Abgleich kann mit einer Korrekturgröße erfolgen, die beispielsweise als Phasenoffset PO angegeben werden kann und die beispielsweise einen Korrekturwinkel angibt, der zu dem Raumzeigerwinkel des durch die Stellgröße SG angegebenen Raumzeigerwinkels addiert wird. Die sich im Laufe des Betriebs, wie beispielsweise durch thermisches Driften, einstellenden Sensorfehler des Lagesensors 6 führen zu einer Abweichung der aus der Stellungsangabe ermittelten Läuferlage des Läufers des Synchronmotors 2 zu der tatsächlichen Läuferlage. Weiterhin können auch Abweichungen durch das Spiel des Getriebes 9 und Ungenauigkeiten aufgrund der Untersetzung des Getriebes 9 entstehen. Dadurch wird die optimale Voreilung von Motormagnetfeld zu Erregermagnetfeld verändert, die zu einer Reduzierung des Wirkungsgrades in dem in Figur 2 veranschaulichten Maße führt. Zum Ausgleich dieser Abweichungen kann ein Adaptionsverfahren vorgesehen werden.

In dem Lageregelungskreis der Figur 3 wird der Phasenoffset PO aus zwei Anteilen gebildet. Dies ermöglicht die permanente Anpassung des Phasenoffsets PO abhängig von einer Abweichung der gemessenen Iststellung Lᵢₛₜ von der tatsächlichen Stellung. Dazu ist ein Signalgenerator 53 vorgesehen, der beispielsweise ein periodisches Signal mit im Wesentlichen konstanten Zykluszeiten erzeugt, insbesondere in Form einer Rechteckschwingung. Die Frequenz des periodisch wechselnden Signals ist so gewählt, dass diese unter der Ansprechfrequenz des Stellgebersystems 1 liegt. Das periodische Signal wird einem Summierglied 54 zugeführt, dessen Ausgang den Phasenoffset PO bereitstellt. Das periodisch wechselnde Signal stellt einen Anteil des Phasenoffsets PO dar. Anstelle eines periodischen Signals kann auch ein anderes nicht-periodisches Signal zur Variation verwendet werden, um den Phasenoffset PO zu erhalten.

Ein weiterer Eingang des Summierglieds 54 wird von einem Integrator 55 bereitgestellt. Bei einem anfänglichen Integratorwert von Null entspricht also lediglich das periodisch wechselnde Signal des Signalgenerators 53 dem Phasenoffset PO, der einem Offsetwinkel entspricht, der dem Raumzeigerwinkel hinzuaddiert wird.

Entspricht die von dem Lagesensor 6 bereitgestellte (gemessene) Iststellung Lᵢₛₜ der tatsächlichen Stellung des Stellglieds 3, so ist die Variation des Phasenoffsets PO am Lagesensor 6 selbst nicht wahrnehmbar. Dies liegt daran, dass sich die Drehmomentschwankungen in der Regel ausgleichen, da die Stellmomente bei Anlegen der positiven und negativen Halbwelle des periodisch wechselnden Signals des Signalgenerators 53 das Stellmoment in gleicher Weise schwächen, so dass der Lageregler 51 eine derartige Variation nicht ausgleicht und eine entsprechende Periodizität der Stellgröße SG nicht auftritt. Die Abschwächung des Stellmoments durch das periodisch wechselnde Signal kann durch geeignete Auswahl bzw. Beschränkung der Amplitude des periodisch wechselnden Signals, das von dem Signalgenerator 53 bereitgestellt wird, erreicht werden.

Entspricht der Phasenoffset PO abgesehen von dem periodisch wechselnden Signal des Signalgenerators 53 nicht dem für ein maximales Stellmoment erforderlichen Phasenoffset PO, so liegt eine Abweichung von einer Voreilung von 90° zwischen dem Motormagnetfeld und dem Erregermagnetfeld vor. In diesem Fall führen die positive und die negative Halbwelle des periodisch wechselnden Signals zu unterschiedlichen Stellmomenten. Diese werden bei entsprechend niederfrequenter Periodizität in detektierbare periodische Lageänderungen des Differenzsignals L_{diff} umgesetzt.

Der Lageregler 51 versucht, diese Lageänderungen auszugleichen, so dass die entsprechende Periodizität auf der Stellgröße SG auftritt. Um den Phasenoffset PO anzupassen, wird die Stellgröße SG über einen Bandpassfilter 56 einem Multiplizierglied 57 zugeführt. Der Bandpassfilter 56 weist einen Bandpassfrequenzbereich auf, der dafür sorgt, dass lediglich derjenige Anteil der Stellgröße SG an das Multiplizierglied 57 weitergegeben wird, der dem Frequenzbereich des periodisch wechselnden Signals des Signalgenerators 53 entspricht. Ebenfalls über einen zweiten, insbesondere einen dem ersten Bandpassfilter 56 entsprechenden Bandpassfilter 58, wird das periodisch wechselnde Signal des Signalgenerators 53 dem Multiplizierglied 57 zugeführt.

Ein Ausgang des Multiplizierglieds 57, das sowohl die gefilterte Stellgröße SG als auch das gefilterte periodisch wechselnde Signal miteinander multipliziert, ist mit dem Integrator 55 verbunden. Der Integrator 55 kann beispielsweise als glättender Tiefpassfilter mit einem Integratoranteil vorgesehen sein, so dass das Filterausgangssignal einen Anteil des erforderlichen Phasenoffsets PO festlegt. Das Einpegeln des Ausgangssignals des Integrators 55 wird durch das Vorzeichen der Abweichung des Phasenoffsets PO von dem idealen Phasenoffset PO bestimmt. Das Vorzeichen der Abweichung des Phasenoffsets PO gibt an, ob die Stellgröße SG überwiegend gleich oder gegenphasig zum periodisch wechselnden Signal des Signalgenerators 53 liegt. Im ersten Fall ist das geglättete Ergebnis der Multiplikation positiv, ansonsten negativ. Dadurch wird der Integratoranteil entsprechend erhöht oder erniedrigt, so dass eine Anpassung des Integratoranteils in beide Richtungen erfolgen kann.

Weiterhin wird mit zunehmendem Betrag der Abweichung des Phasenoffsets PO von dem idealen Phasenoffset die Amplitude der Schwankungen der Stellgröße SG größer und damit auch die Signalstärke nach der Multiplikation in dem Multiplizierglied 57. Dadurch wird der Integratorwert desto schneller an den idealen Phasenoffset herangeführt, je größer Betrag der Abweichung des Phasenoffsets PO von dem idealen Phasenoffset ist.

Die Wirksamkeit des beschriebenen Verfahrens wird weiter erhöht, wenn der Lageregler 51 um einen speziellen Übertragungspfad mit imaginären Polpaaren erweitert wird, wobei die Pollagen so gewählt sind, dass sie mit den Hauptfrequenzanteilen des Signalgeneratorsignals übereinstimmen.

Zur Vermeidung abrupter Momentensprünge kann weiterhin vorgesehen sein, dass die Flankensteilheit des periodisch wechselnden Signals des Signalgenerators 53 begrenzt wird und stattdessen ein trapezförmiges Signal oder dergleichen bereitgestellt wird. Wesentlich ist, dass das periodisch wechselnde Signal nullpunktsymmetrisch ist, d. h. dass die negativen und positiven Halbwellen jeweils gleiche Flächen überdecken. Der glättende Tiefpassfilter des Integrators 55 kann mit einer FIR- oder IIR-Struktur bzw. einer geeigneten Kombination dieser Strukturen ausgebildet sein.

In Figur 4 ist eine weitere Ausführungsform dargestellt, bei der der Lageregler 51 mit einer Vorsteuerungseinheit 60 versehen ist. Die Vorsteuerungseinheit empfängt die Sollstellung L_{Soll} und ordnet dieser einen Vorsteuerungswert zu, der der Stellgröße SG mithilfe eines weiteren Summiergliedes 61 hinzuaddiert wird. Die Zuordnung des Vorsteuerungswertes zu der Sollstellung L_{Soll} kann vor Inbetriebnahme des Stellgebersystems appliziert werden. Damit kann der Lageregler 51 auf Störverhalten optimiert werden und das Einpegeln des Phasenoffsets PO gelingt zuverlässig, auch während gewünschter Lageänderungen.

## Patentansprüche

1. Verfahren zur Lageregelung eines mit einer Rückstellkraft beaufschlagten Stellglieds (3) in einem Stellgebersystem (1) mit einer elektronisch kommutierten elektrischen Maschine (2), mit folgenden Schritten:
- Durchführen der Lageregelung des Stellglieds (3) abhängig von einer vorgegebenen Soll-Stellungsangabe und einer Ist-Stellungsangabe, wobei die Lageregelung eine Stellgröße (SG) bereitstellt, die einem Raumzeiger mit einer vorgegebener Amplitude zugeordnet ist, mit dem eine Statoranordnung der elektrischen Maschine (2) ansteuerbar wird;
- Beaufschlagen des Raumzeigers mit einer Korrekturgröße (PO), um einen Raumzeigerwinkel des Raumzeigers zu korrigieren;
- Bereitstellen eines periodischen Hilfssignals;
- Variieren des Raumzeigerwinkels des durch die Stellgröße (SG) definierten Raumzeigers durch das Hilfssignal;
- Aufintegrieren einer Größe zu einem Integrationswert, wobei die zu integrierende Größe von dem Hilfssignal und der Stellgröße (SG) der Lageregelung, die als Reaktion auf das Variieren des Raumzeigerwinkels des Raumzeigers erhalten wurde, abhängt, wobei aus dem Integrationswert die Korrekturgröße (PO) abgeleitet wird.

2. Verfahren nach Anspruch 1, wobei das Hilfssignal und die durch das Variieren des Raumzeigerwinkels des Raumzeigers erhaltene Stellgröße (SG) bandpassgefiltert werden, wobei die zu integrierende Größe einem Produkt des bandpassgefilterten Hilfssignals und der bandpassgefilterten durch das Variieren des Raumzeigerwinkels des Raumzeigers erhaltenen Stellgröße (SG) entspricht.

3. Verfahren nach Anspruch 1 oder 2, wobei die zu integrierende Größe vor dem Integrieren tiefpassgefiltert wird.

4. Verfahren nach einem der Ansprüche 1 bis 3, wobei eine Vorsteuerung vorgesehen ist, um die Soll-Stellungsangabe (L_{Soll}) einer Vorsteuergröße zuzuordnen, mit der die von der Lageregelung bereitgestellte Stellgröße, insbesondere durch Addition, beaufschlagt wird.

5. Verfahren nach einem der Ansprüche 1 bis 4, wobei eine Hauptfrequenz des periodischen Hilfssignals geringer ist als die Grenzfrequenz der Lageregelung.

6. Verfahren nach einem der Ansprüche 1 bis 5, wobei das periodische Hilfssignal als Rechtecksignal, trapezförmiges Signal oder sinusförmiges Signal oder als eine Kombination davon bereitgestellt wird.

7. Verfahren nach einem der Ansprüche 1 bis 6, wobei der Raumzeigerwinkel in einem Bereich von bis zu +/- 20°, insbesondere in einem Bereich von bis zu +/- 10° des Raumzeigerwinkels variiert wird.

8. Vorrichtung zur Lageregelung eines Stellglieds in einem Stellgebersystem (1) mit einer elektronisch kommutierten elektrischen Maschine (2), wobei die Vorrichtung umfasst:
- eine Lageregelungseinheit (5) zum Durchführen einer Lageregelung abhängig von einer vorgegebenen Soll-Stellungsangabe (L_{Soll}) und einer Ist-Stellungsangabe (L_{Ist}), wobei die Lageregelung eine Stellgröße (SG) bereitstellt, die einem Raumzeiger mit einer vorgegebener Amplitude entspricht, mit dem eine Statoranordnung der elektrischen Maschine (2) ansteuerbar wird;
- eine Einrichtung zum Beaufschlagen des Raumzeigers mit einer Korrekturgröße (PO), um einen Raumzeigerwinkel des Raumzeigers zu korrigieren;
- einen Signalgenerator (53) zum Bereitstellen eines periodischen Hilfssignals;
- eine Einrichtung zum Variieren des Raumzeigerwinkels des durch die Stellgröße definierten Raumzeigers durch das Hilfssignal;
- einen Integrator (55) zum Aufintegrieren einer Größe zu einem Integrationswert, wobei die zu integrierende Größe von dem Hilfssignal und der Stellgröße der Lageregelung, die als Reaktion auf das Variieren des Raumzeigerwinkels des Raumzeigers erhalten wurde, abhängt, wobei aus dem Integrationswert die Korrekturgröße (PO) abgeleitet wird.

9. Stellgebersystem (1) umfassend:
- ein mit einer Rückstellkraft beaufschlagtes Stellglied;
- einen Lagesensor (6) zum Bereitstellen einer Iststellungsangabe (L_{Ist});
- eine elektrische Maschine (2), die mit dem Stellglied (3) gekoppelt ist;
- eine Vorrichtung nach Anspruch 8.

10. Computerprogrammprodukt, das einen Programmcode enthält, der, wenn er auf einer Datenverarbeitungseinheit ausgeführt wird, das Verfahren nach einem der Ansprüche 1 bis 7 durchführt.

## Claims

1. Method for controlling the position of an actuator (3) that is influenced by a restoring force and is in a positioner system (1) having an electronically commutated electrical machine (2), comprising the following steps:
- controlling the position of the actuator (3) in dependence upon a predefined set position value and an actual position value, wherein the position control provides a position variable (SG) that is allocated to a space vector with a predefined amplitude with which it is possible to control a stator arrangement of the electrical machine (2);
- influencing the space vector by a correction variable (PO) in order to correct a space vector angle of the space vector;
- providing a periodic auxiliary signal;
- varying the space vector angle of the space vector that is defined by the position variable (SG) by means of the auxiliary signal;
- integrating a variable to form an integration value, wherein the variable to be integrated depends upon the auxiliary signal and the position variable (SG) of the position control that was obtained in response to varying the space vector angle of the space vector, wherein the correction variable (PO) is derived from the integration value.

2. Method according to Claim 1, wherein the auxiliary signal and the position variable (SG) that is obtained by varying the space vector angle of the space vector are band-pass filtered, wherein the variable to be integrated corresponds to a product of the band-pass filtered auxiliary signal and the band-pass filtered position variable (SG) that is obtained by varying the space vector angle of the space vector.

3. Method according to Claim 1 or 2, wherein the variable to be integrated is low-pass filtered prior to being integrated.

4. Method according to one of Claims 1 to 3, wherein a preliminary control is provided in order to allocate the set position value (Lₛₒₗₗ) to a preliminary control value that influences the position variable that is provided by the position control, in particular by means of summation.

5. Method according to one of Claims 1 to 4, wherein a main frequency of the periodic auxiliary signal is less than the limit frequency of the position control.

6. Method according to one of Claims 1 to 5, wherein the periodic auxiliary signal is provided as a square wave signal, trapezoid signal or a sinusoid signal or as a combination thereof.

7. Method according to one of Claims 1 to 6, wherein the space vector angle is varied in a range of up to +/- 20°, in particular in a range of up to +/- 10° of the space vector angle.

8. Apparatus for controlling the position of an actuator in a positioner system (1) having an electronically commutated electrical machine (2), wherein the apparatus comprises:
- a position control unit (5) for performing a position control in dependence upon a predefined set position value (Lₛₒₗₗ) and an actual position value (Lᵢₛₜ), wherein the position control provides a position variable (SG) that corresponds to a space vector with a predefined amplitude, by means of which space vector it is possible to control a stator arrangement of the electrical machine (2) ;
- a device for influencing the space vector by a correction variable (PO) in order to correct a space vector angle of the space vector;
- a signal generator (53) for providing a periodic auxiliary signal;
- a device for varying the space vector angle of the space vector that is defined by the position variable by means of the auxiliary signal;
- an integrator (55) for integrating a variable to form an integration value, wherein the variable to be integrated depends upon the auxiliary signal and the position variable of the position control that was obtained in response to varying the space vector angle of the space vector, wherein the correction variable (PO) is derived from the integration value.

9. Positioner system (1) comprising:
- an actuator that is influenced by a restoring force;
- a position sensor (6) for providing an actual position value (List) ;
- an electrical machine (2) that is coupled to the actuator (3);
- an apparatus according to Claim 8.

10. Computer program product that comprises a program code that performs the method according to one of Claims 1 to 7 when said program code is implemented on a data-processing unit.

## Revendications

1. Procédé de régulation de la position d'un actionneur (3) qui est soumis à une force de rappel dans un système transmetteur d'actionnement (1) comportant une machine électrique (2) à commutation électronique, comprenant les étapes suivantes :
- exécution de la régulation de position de l'actionneur (3) en fonction d'une indication de position de consigne prédéfinie et d'une indication de position réelle, dans lequel la régulation de position fournit une grandeur de réglage (SG) associée à un indicateur spatial d'amplitude prédéfinie, au moyen duquel un dispositif statorique de la machine électrique (2) peut être commandé ;
- application d'une grandeur de correction (PO) à l'indicateur spatial afin de corriger un angle d'indicateur spatial de l'indicateur spatial ;
- fourniture d'un signal auxiliaire périodique ;
- variation de l'angle d'indicateur spatial de l'indicateur spatial défini par la grandeur de réglage (SG), au moyen du signal auxiliaire ;
- intégration d'une grandeur pour obtenir une valeur d'intégration, la grandeur à intégrer dépendant du signal auxiliaire et de la grandeur de réglage (SG) de la régulation de position, obtenue en réponse à la variation de l'angle d'indicateur spatial de l'indicateur spatial, dans lequel la grandeur de correction (PO) est déduite de la valeur d'intégration.

2. Procédé selon la revendication 1, dans lequel le signal auxiliaire et la grandeur de réglage (SG) obtenue par variation de l'angle d'indicateur spatial de l'indicateur spatial sont soumis à un filtrage passe-bande, dans lequel la grandeur à intégrer correspond à un produit du signal auxiliaire soumis à un filtrage passe-bande par la grandeur de réglage (SG) obtenue par la variation de l'angle d'indicateur spatial de l'indicateur spatial et soumise à filtrage passe-bas.

3. Procédé selon la revendication 1 ou 2, dans lequel la grandeur à intégrer est soumise à un filtrage passe-bas avant l'intégration.

4. Procédé selon l'une des revendications 1 à 3, dans lequel il est prévu une commande destinée à associer l'indication de position de consigne (Lₛₒₗₗ) à une grandeur de précommande qui est appliquée, en particulier par addition, à la grandeur de réglage fournie par la régulation de position.

5. Procédé selon l'une des revendications 1 à 4, dans lequel une fréquence principale du signal auxiliaire périodique est inférieure à la fréquence limite de la régulation de position.

6. Procédé selon l'une des revendications 1 à 5, dans lequel le signal auxiliaire périodique est fourni sous la forme d'un signal carré, trapézoïdal ou sinusoïdal ou sous la forme d'une combinaison de ceux-ci.

7. Procédé selon l'une des revendications 1 à 6, dans lequel l'angle d'indicateur spatial est amené à varier dans une plage allant jusqu'à +/- 20°, en particulier dans une plage allant jusqu'à +/- 10° de l'angle d'indicateur spatial.

8. Dispositif de régulation de la position d'un actionneur dans un système transmetteur d'actionnement (1) comportant une machine électrique (2) à commutation électronique, le dispositif comprenant :
- une unité de régulation de position (5) destinée à effectuer une régulation de position en fonction d'une indication de position de consigne (Lₛₒₗₗ) prédéfinie et d'une indication de position réelle (Lᵢₛₜ), dans lequel la régulation de position fournit une grandeur de réglage (SG) qui correspond à un indicateur spatial d'amplitude prédéfinie, au moyen duquel un dispositif statorique de la machine électrique (2) peut être commandé ;
- un dispositif destiné à appliquer une grandeur de correction (PO) à l'indicateur spatial afin de corriger un angle d'indicateur spatial de l'indicateur spatial ;
- un générateur de signal (53) destiné à fournir un signal auxiliaire périodique ;
- un dispositif destiné à faire varier l'angle d'indicateur spatial de l'indicateur spatial défini par la grandeur de réglage, au moyen du signal auxiliaire ;
- un intégrateur (55) destiné à intégrer une grandeur pour obtenir une valeur d'intégration, la grandeur à intégrer dépendant du signal auxiliaire et de la grandeur de réglage de la régulation de position, obtenue en réponse à la variation de l'angle d'indicateur spatial de l'indicateur spatial, dans lequel la valeur de correction (PO) est déduite de la valeur d'intégration.

9. Système transmetteur d'actionnement (1), comprenant :
- un actionneur qui est soumis à une force de rappel ;
- un capteur de position (6) destiné à fournir une indication de position réelle (Lᵢₛₜ) ;
- une machine électrique (2) reliée à l'actionneur (3) ;
- un dispositif selon la revendication 8.

10. Produit de programme d'ordinateur contenant un code de programme qui, lorsqu'il est exécuté sur une unité de traitement de données, met en œuvre le procédé selon l'une des revendications 1 à 7.
